# EUROPÄISCHE PATENTSCHRIFT

(11) **EP 2 570 684 B1**
(45) Veröffentlichungstag und Bekanntmachung des Hinweises auf die Patenterteilung: **16.12.2015**
(21) Anmeldenummer: 11193986.4
(22) Anmeldetag: 16.12.2011
(51) Int. Cl.: F16B 37/00

(54) **Verfahren zur Verbindung eines ersten Bauteils mit einem zweiten Bauteil**
Method for connecting one component with a second component
Procédé destiné à relier un premier composant à un second composant

(30) Priorität: 19.09.2011 US 201161536277 P
(43) Veröffentlichungstag der Anmeldung: 20.03.2013
(73) Patentinhaber: Magna Steyr Fahrzeugtechnik AG & Co KG, 8041 Graz (AT)
(72) Erfinder: Hofer, Bernhard, 8053 Graz (AT); Passegger, Wolfgang, 8430 Tillmitsch (AT)
(74) Vertreter: Zangger, Bernd

(56) Entgegenhaltungen:
- DE-A1-102007 016 851
- DE-U1-202008 009 055
- US-A- 4 438 971
- US-A- 5 180 267
- US-A1- 2009 047 100

## Beschreibung

Die vorliegende Erfindung betrifft ein Verfahren zur Verbindung eines ersten Bauteils mit einem zweiten Bauteil. Beispielsweise werden solche Verfahren zur Verbindung von Schalenbauteilen aus Kunststoff in der Automobilindustrie eingesetzt.

Verfahren zur Verbindung zweier Bauteile sind hinlänglich bekannt. Zum Beispiel ist das Herstellen von Verbindungen durch Kleben, Nieten, Nageln oder mit Hilfe von Schrauben allgemein bekannt. Vor allem bei der Verwendung von Schrauben stellt sich dabei, besonders für flächige Bauteile, das Problem geeignete Flächen für die Ausbildung eines Innengewindes als Gegenstück für das Schraubengewinde zur Verfügung zu stellen. Hierfür werden im bekannten Stand der Technik sog. Schraubdome oder Befestigungsdome eingesetzt, die auf einem Bauteil angeformt sein können, beispielsweise mit dem Bauteil mitgespritzt. Ähnliche Hilfsmittel und Einsätze können auch nachträglich an einem Bauteil angebracht werden, üblicherweise durch Kleben oder Schweißen. Sowohl das Anformen als auch das nachträgliche Befestigen der bekannten Schraubdome erfordern aufwändige Prozessschritte.

Ein Befestigungsdom für einen Kunststoffträger, der an dem Kunststoffträger angeformt ist, ist aus der DE 20 2008 009 055 U 1 bekannt. Der Befestigungsdom weist einen Grundkörper auf, an dem Verstärkungsrippen angeformt sind.

Ein Verfahren zum Herstellen einer Befestigungsanordnung eines Befestigungsdomes an einem dünnwandigen Bauteil ist aus der DE 10 2007 016 851 A1 bekannt. Hierbei wird ein Ende eines Befestigungsdomes als Fügeabschnitt ausgebildet. Zusätzlich wird an einer Innenseite eines Bauteils ein Fügeabschnitt gebildet, der an den Fügeabschnitt des Befestigungsdomes angepasst ist. Die beiden Fügeabschnitte werden dann mit Klebstoff benetzt, gefügt und durch Lichthärten des Klebstoffes fest miteinander verbunden. Die Fügung des Befestigungsdomes ist hierbei aufwändig. Die Fügeabschnitte müssen exakt aufeinander abgestimmt sein, der Bauteil muss für die Aufnahme des Befestigungsdomes vorbereitet werden.

Aus der US 4 438 971 A ist eine Vorrichtung und ein Verfahren bekannt zur Befestigung einer äußeren Kunststoff-Platte an einer Karosseriestruktur umfassend kunststoffgefüllte Befestigungsblöcke.

Es ist eine Aufgabe der Erfindung, Verfahren zur Verbindung eines ersten Bauteils mit einem zweiten Bauteil in dieser Hinsicht zu verbessern und insbesondere ein einfaches und kostengünstiges Verfahren anzugeben, dass eine sichere Verbindung der Bauteile ermöglicht und dabei auch tolerant bezüglich der Oberflächenbeschaffenheit der Bauteile ist.

Die Lösung der Aufgabe erfolgt durch ein Verfahren zur Verbindung eines ersten Bauteils mit einem zweiten Bauteil umfassend die Verfahrensschritte:
- ein Befestigungsdom aus aushärtbarem Material wird auf das erste Bauteil aufgebracht,
- der Befestigungsdom härtet auf dem ersten Bauteil aus, und
- ein Verbindungselement wird durch das zweite Bauteil, das erste Bauteil und zumindest teilweise durch den Befestigungsdom geführt,
   wobei das erste Bauteil und das zweite Bauteil flach ausgebildet sind und aufeinander liegen und das Material des Befestigungsdomes eine Formstabilität aufweist, so dass der Befestigungsdom die Form eines Domes, also eine Erhebung ausbildet und bis zum Aushärten des Materials bewahrt.

Die beiden Bauteile werden also mit Hilfe eines Verbindungselementes, wie zum Beispiel einer Schraube, miteinander verbunden. Um dem Verbindungselement eine gute Angriffsfläche bereit zu stellen, wird zunächst ein Befestigungsdom für das Verbindungselement gebildet. Der Befestigungsdom wird dabei nachträglich auf zumindest einem der beiden Bauteile ausgebildet. Dazu wird ein aushärtbares Material verwendet, dass zunächst - insbesondere während dem Aufbringen auf das Bauteil - weich und gut plastisch verformbar ist. Das Material kann nicht flüssig sein, da dadurch die Ausbildung eines Domes nicht möglich wäre. Das Material muss eine gewisse Formstabilität aufweisen, um die Form eines Domes, also eine Erhebung ausbilden und bis zum Aushärten des Materials bewahren zu können, sodass dem Verbindungselement, beispielsweise einer Schraube, eine entsprechende Haltefläche, beispielsweise für ein Gewinde geboten werden kann. Das Material ist andererseits beim Aufbringen auf das Bauteil so weich, zäh oder gallertartig, dass es sich an die Konturen des Bauteiles anpassen kann. Beispielsweise wird die erforderliche Konsistenz von einem Thermoplast in seinem thermoplastischen Aggregatszustand erreicht. Dadurch wird eine sichere Auflage des Befestigungsdomes auf dem ersten Bauteil ermöglicht, die Kontaktfläche zwischen Befestigungsdom und erstem Bauteil erhöht und auch die Voraussetzung für eine eventuelle formschlüssige Verbindung mit einer entsprechend ausgebildeten Oberfläche des ersten Bauteils geschaffen. Der erfindungsgemäße Befestigungsdom kann daher auch auf unebenen Flächen platziert werden und das Setzen des Domes erfordert keine große Genauigkeit.

Mit einem erfindungsgemäßen Verfahren ist es natürlich auch möglich, mehr als zwei Bauteile zu verbinden. Zusätzlich zum ersten und zweiten Bauteil können noch weitere Bauteile vorhanden sein, die vom selben Verbindungselement durchdrungen werden, welches in den Befestigungsdom geführt wird, beispielsweise zwischen dem ersten und dem zweiten Bauteil, so dass alle Bauteile miteinander verbunden werden.

Weiterbildungen der Erfindung sind in den abhängigen Ansprüchen, der Beschreibung sowie den beigefügten Zeichnungen angegeben.

Bevorzugt ist das aushärtbare Material so ausgeführt, dass es am ersten Bauteil stoffschlüssig haftet. Dadurch kann auf zusätzliche Haftmittel, wie Klebstoffe, verzichtet werden.

Alternativ oder zusätzlich kann jedoch auch ein, insbesondere stoffschlüssiges, Haftmittel verwendet werden um den Befestigungsdom am ersten Bauteil sicher zu fixieren. Das kann beispielsweise ein Klebstoff oder ein Doppelklebeband sein.

In einer bevorzugten Ausführungsform ist das aushärtbare Material ein Kunststoff, insbesondere ein thermoplastischer Kunststoff. Thermoplastische Kunststoffe weisen die erforderlichen Eigenschaften zur erfindungsgemäßen Ausbildung eines Befestigungsdomes auf und sind gut zu verarbeiten.

Ein erfindungsgemäßes Verfahren kann bevorzugt angewendet werden, wenn das erste und/oder das zweite Bauteil aus Kunststoff besteht.

Ein erfindungsgemäßes Verfahren zur Verbindung zweier Bauteile verwendet vorzugsweise als Verbindungselement eine Schraube. Die Schraube kann vorzugsweise einen Kopf aufweisen, sodass ein sicherer kraftschlüssiger Halt des Verbindungselementes am Kopfende ohne weitere Maßnahmen gewährleistet ist. Der Stift der Schraube kann beispielsweise spitz zulaufen, sodass die Schraube leicht in einen Befestigungsdom eingedreht werden kann der nicht vorgebohrt ist.

Das erste und/oder das zweite Bauteil sind bevorzugt an einer Position, an der die beiden Bauteile miteinander verbunden werden, vorgebohrt. Dadurch wird das Führen des Verbindungselementes durch das erste und/oder das zweite Bauteil erleichtert. Der Befestigungsdom wird einfach auf das vorgesehene Befestigungsloch aufgesetzt.

In einer Ausführungsform des erfindungsgemäßen Verfahrens ist der Befestigungsdom zum Zeitpunkt des Einführens des Verbindungselements nicht vorgebohrt. Bei geeigneter Auswahl des aushärtbaren Materials und/oder geeignetem Zeitpunkt des Einführens des Verbindungselementes in den Befestigungsdom ist das Material des Doms weich genug um relativ mühelos mit beispielsweise einer selbstfurchenden Schraube durchdrungen zu werden. Das Verbindungselement muss nicht an einer genau vorbestimmten Position in den Befestigungsdom eingeführt werden.

Alternativ kann der Befestigungsdom auch vorgebohrt sein, bevor das Verbindungselement durch den Befestigungsdom geführt wird.

Das aushärtbare Material härtet bevorzugt durch die Einwirkung von Luft, durch Temperaturänderung, Lichteinstrahlung also beispielsweise Bestrahlung mit UV-Licht, oder durch Beigabe eines Zusatzstoffes aus. Der Zusatzstoff kann beispielsweise ein einem geeigneten Kunststoff in zerbrechlichen Kügelchen beigegebenes Härtemittel sein. Beim Aufbringen des Kunststoff-Domes auf ein Bauteil können die Kügelchen zerplatzen, um so das Härtemittel freizugeben. Das aushärtbare Material kann daher auch aus mehreren Materialkomponenten bestehen.

Das aushärtbare Material wird bevorzugt vor dem Aufbringen auf das erste Bauteil aus einer luftdichten Verpackung, insbesondere aus einer Einzel-Verpackung für genau einen Befestigungsdom, entnommen. Bis zur Verwendung ist das Material dadurch geschützt und kann, beispielsweise bei Lufthärtung, nicht vorzeitig aushärten.

Gemäß einer bevorzugten Ausführungsform des erfindungsgemäßen Verfahrens wird das aushärtbare Material in ein Werkzeug eingebracht, mit dem Werkzeug auf das erste Bauteil aufgebracht, dann vom Werkzeug getrennt und härtet dann auf dem ersten Bauteil aus. Das aushärtbare Material wird also mit einem Werkzeug appliziert, wodurch die Handhabung des aushärtbaren Materials vereinfacht werden kann und eine industrielle Anwendung des Verfahrens erleichtert wird. Das Aushärten des Materials erfolgt vorteilhaft nach dem Trennen vom Werkzeug, kann aber auch teilweise oder ganz bei bestehender Verbindung mit dem Werkzeug erfolgen.

Vorteilhaft wird das aushärtbare Material in einer Verpackung, insbesondere in einer Einzel-Verpackung für genau einen Befestigungsdom, in das Werkzeug eingelegt und vor dem Aufbringen auf das erste Bauteil zumindest ein erster Teil der Verpackung entfernt. Die Verpackung muss gemäß dieser Variante des Verfahrens nicht geöffnet werden um das aushärtbare Material in das Werkzeug einzulegen. Erst kurz vor dem Aufbringen des Materials auf das Bauteil wird zumindest ein Teil der Verpackung, beispielsweise ein Deckel, entfernt, so dass das Material direkt auf das Bauteil aufgesetzt werden kann und am Bauteil haften kann. Ein weiterer Teil der Verpackung kann beispielsweise beim Aufdrücken des Materials auf das Bauteil noch zwischen aushärtbarem Material und Werkzeug verbleiben, um das folgende Trennen von Material und Werkzeug zu erleichtern.

Gemäß einer Ausführungsform des Verfahrens kann daher ein zweiter Teil der Verpackung nach dem Aufbringen des aushärtbaren Materials auf das erste Bauteil entfernt werden. Der zweite Teil der Verpackung, beispielsweise eine Folie die als Trennmittel zwischen Werkzeug und Material wirkt, wird nach dem Abziehen des Werkzeuges vom Bauteil entfernt, so dass das Material danach ungehindert aushärten kann.

Gemäß einer weiteren Ausgestaltung des Verfahrens ist das Werkzeug dazu ausgelegt, das aushärtbare Material vor dem Aufbringen auf das erste Bauteil zumindest abschnittsweise aufzuweichen, beispielsweise indem durch das Werkzeug Hitze an das aushärtbare Material abgegeben wird. Dadurch kann sich der Befestigungsdom besser an die Konturen des Bauteils anpassen und besser am Bauteil haften, unter geeigneten Bedingungen auch mit der Bauteil-Oberfläche verschmelzen.

Die Erfindung wird im Folgenden beispielhaft unter Bezugnahme auf die Zeichnungen beschrieben.
- Fig. 1: ist eine 3D-Darstellung von Komponenten zur Ausführung eines erfindungsgemäßen Verfahrens.
- Fig. 2: ist eine schematische Schnittdarstellung von erfindungsgemäß verbundenen Komponenten.
- Fig. 3: ist eine weitere schematische Schnittdarstellung von erfindungsgemäß verbundenen Komponenten.
- Fig. 4: ist eine weitere schematische Schnittdarstellung von erfindungsgemäß verbundenen Komponenten.
- Fig. 5: ist eine weitere schematische Schnittdarstellung von erfindungsgemäß verbundenen Komponenten.
- Fig. 6a-6c: sind Darstellungen von Befestigungsdomen in ihren Verpackungen, dabei sind Fig. 6a und Fig. 6b 3D-Darstellungen und Fig. 6c eine Schnittdarstellung zur Fig. 6b.
- Fig. 7a-7f: sind Darstellungen der Verfahrensschritte eines erfindungsgemäßen Verfahrens.

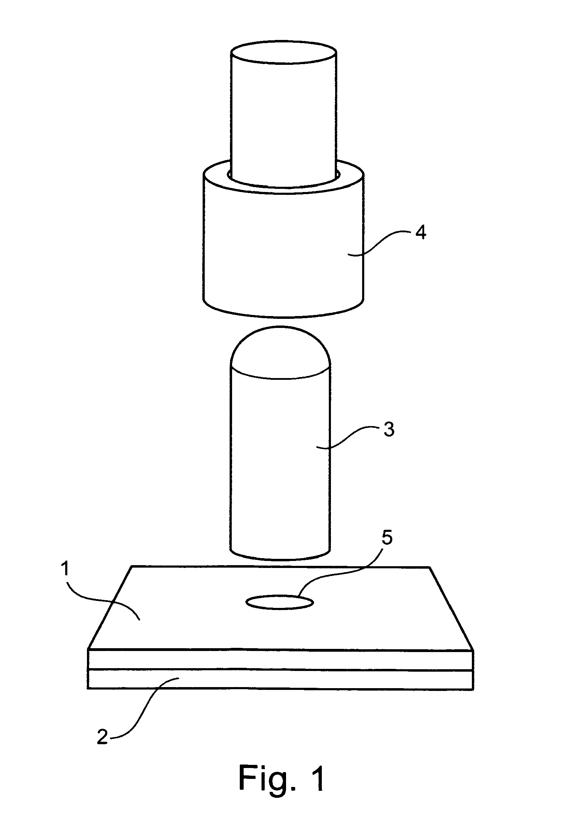

In der Fig. 1 sind wesentliche Komponenten eines erfindungsgemäßen Verfahrens dreidimensional dargestellt. Ein erstes Bauteil 1 soll mit einem zweiten Bauteil 2 verbunden werden. Die beiden flachen Bauteile 1 und 2 können vorzugsweise aus Kunststoff bestehen. Dazu wird ein Befestigungsdom 3 aus einem aushärtbaren Material, beispielsweise aus thermoplastischem Kunststoff, verwendet, der auf das erste Bauteil 1 aufgebracht wird. Der Befestigungsdom 3 wird dabei auf eine Bohrung 5 aufgesetzt, die durch das erste Bauteil 1 und das zweite Bauteil 2 reicht. Die Bohrung 5 kann in den beiden Bauteilen 1 und 2 verschieden groß ausgeführt sein, beispielsweise um einerseits im Bauteil 2 groß genug zu sein um das Einführen eines Verbindungselementes zu erleichtern und andererseits im Bauteil 1 klein genug zu sein um dem Verbindungselement wenig Spiel zu geben und dem Befestigungsdom eine ausreichende Auflagefläche zu erhalten. Der Befestigungsdom 3 wird mit Hilfe eines Werkzeuges 4 auf das erste Bauteil 1 aufgesetzt.

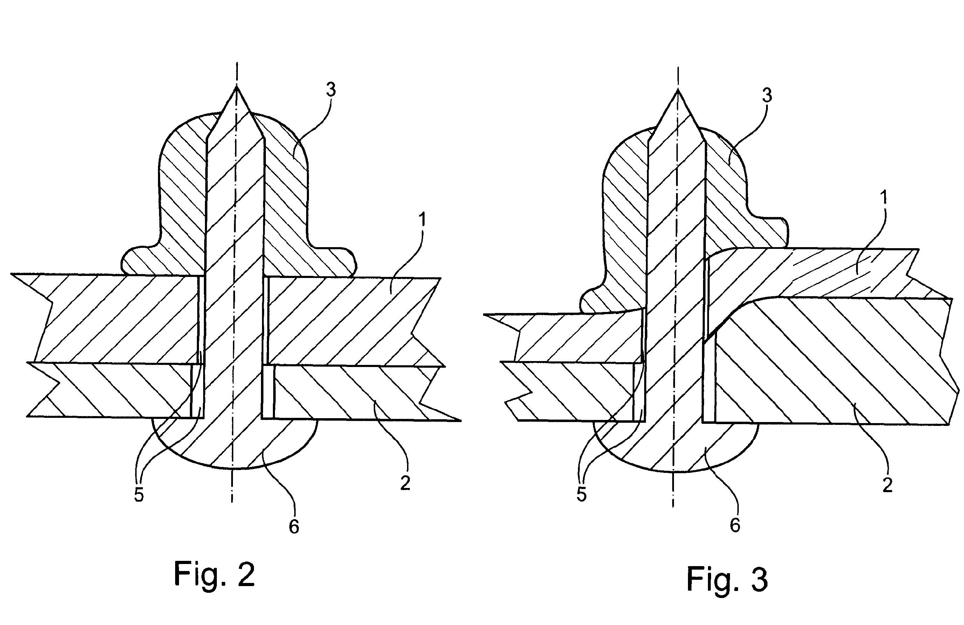

Fig. 2 zeigt eine schematische Schnittdarstellung einer Verbindung zwischen Bauteil 1 und Bauteil 2, die mit einem erfindungsgemäßen Verfahren durchgeführt wurde. Der Befestigungsdom 3 ist über der Bohrung 5 auf das erste Bauteil 1 aufgesetzt. Als Verbindungselement 6 dient eine Schraube mit einem Kopf, der auf dem zweiten Bauteil 2 anliegt. In der Fig. 2 durchdringt das Verbindungselement 6 den Befestigungsdom 3, so dass die Spitze der Schraube außerhalb des Befestigungsdomes 3 zu liegen kommt. Selbstverständlich kann das Verbindungselement 6 auch innerhalb des Befestigungsdomes 3 enden.

Die Fig. 3 bis Fig. 5 zeigen in weiteren schematischen Darstellungen dass das erfindungsgemäße Verfahren besonders unempfindlich gegenüber großen Toleranzen bzw. Ungenauigkeiten der Bauteile ist.

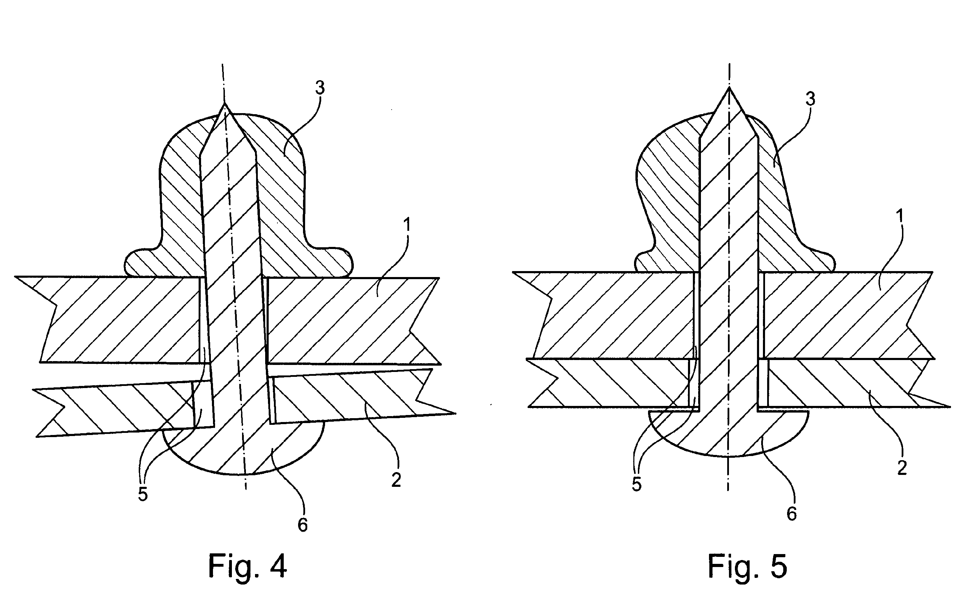

So wird in Fig. 3 der Befestigungsdom 3 an einer Kante der Bauteile 1 und 2 aufgesetzt, sodass der Befestigungsdom 3 unterschiedliche Höhen entlang seines Umfangs aufweist. Dies wird dadurch ermöglicht, dass sich das zunächst weiche Material des Befestigungsdomes 3 gut an die Konturen der Oberfläche des ersten Bauteils 1 anpassen kann. Das erfindungsgemäße Verfahren eignet sich auch dann, wenn die beiden Bauteile 1 und 2 nicht plan aufeinander liegen, wie in Fig. 4 dargestellt. Weiters ist für das Setzen des Befestigungsdomes 3 selbst keine hohe Genauigkeit erforderlich, da, wie in Fig. 5 dargestellt, auch ein beispielsweise schief sitzender Befestigungsdom 3 ausreichenden Halt für ein Verbindungselement 6 bieten kann.

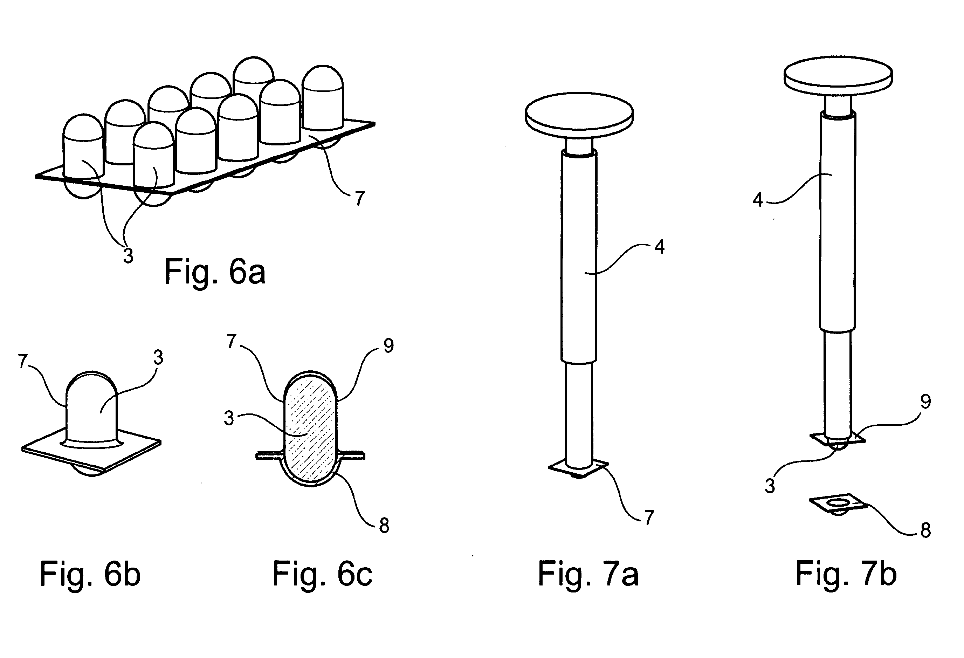

Die Fig. 6a bis Fig. 6c zeigen eine vorteilhafte Aufbewahrung des aushärtbaren Materials für die Befestigungsdome 3. In Fig. 6a ist eine Verpackung 7 für mehrere Befestigungsdome 3 gezeigt, die den bekannten Blisterverpackungen ähnelt. Die einzelnen Befestigungsdome 3 sind mit deren Einzel-Verpackungen bzw. Kapseln, dargestellt in Fig. 6b, leicht von den übrigen Einzel-Verpackungen zu trennen. Wie in Fig. 6c dargestellt, besteht eine Einzel-Verpackung aus einem ersten Teil der Verpackung 8, der einem Deckel entspricht und der vom Befestigungsdom 3 abnehmbar ist ohne den Rest der Verpackung 7, nämlich den zweiten Teil der Verpackung 9, zu entfernen.

Einzelne Schritte eines erfindungsgemäßen Verfahrens sind in den Fig. 7a bis Fig. 7f dargestellt.

Wie in Fig. 7a gezeigt, wird zunächst ein Befestigungsdom in seiner Einzel-Verpackung 7 in das Werkzeug 4 eingelegt.

Daraufhin wird der erste Teil der Verpackung 8 vom Befestigungsdom 3 abgezogen, wie Fig. 7b zu sehen.

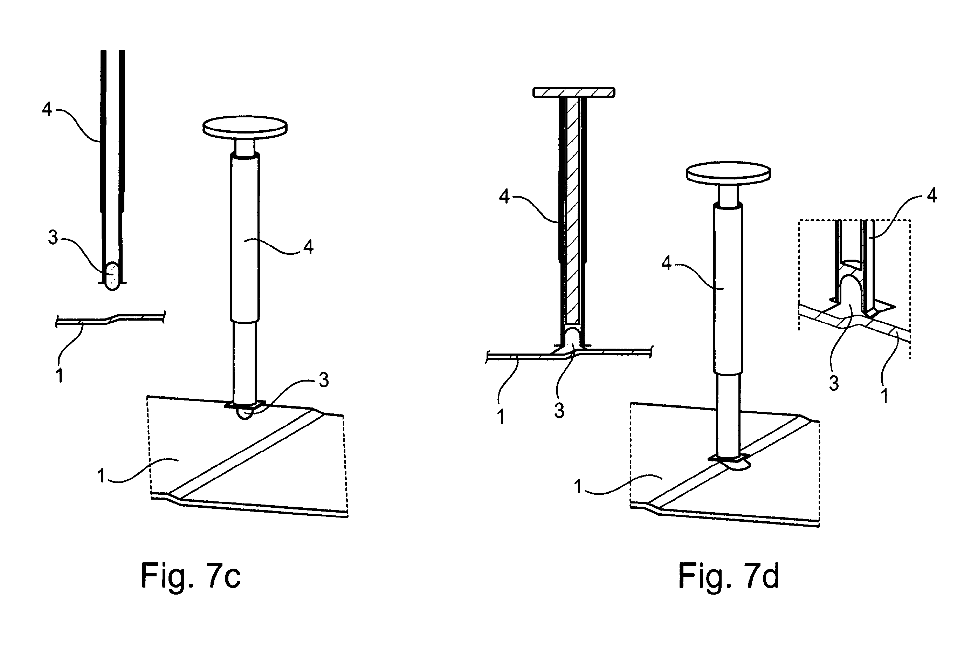

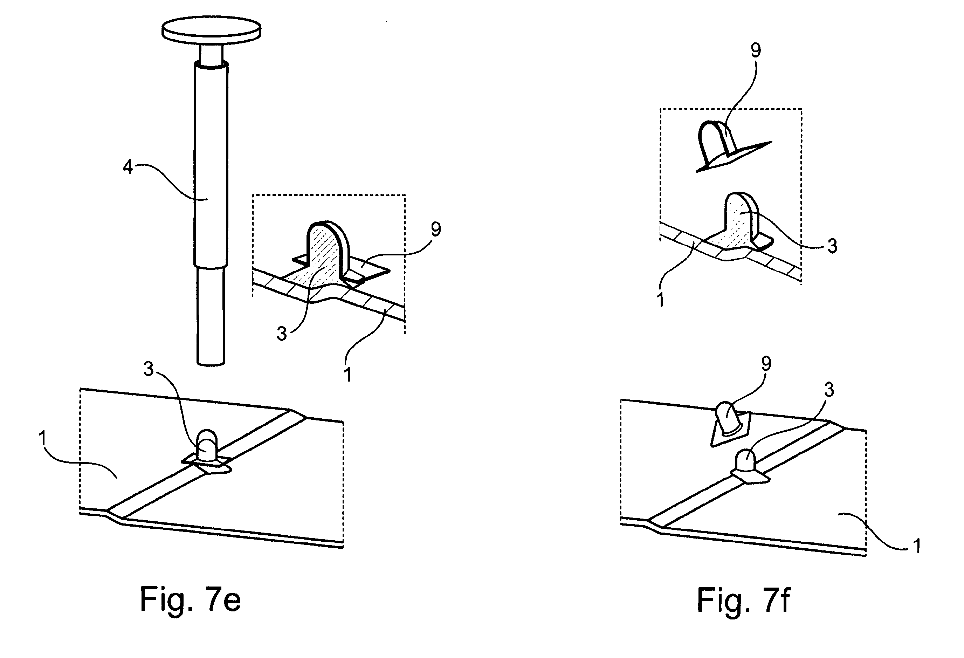

Die Fig. 7 c und 7d zeigen schließlich das Aufdrücken der aushärtbaren Masse des Befestigungsdomes 3 auf das erste Bauteil 1, wobei das Bauteil 1 im gezeigten Beispiel an der vorgesehenen Verbindungsstelle eine Kante aufweist. Zusätzlich zur dreidimensionalen Darstellung ist in den Fig. 7c und Fig. 7d auch eine Schnittdarstellung zu sehen, die die Position des aushärtbaren Materials des Befestigungsdomes 3 im Werkzeug 4 zeigt. In der Fig. 7d passt sich die aufgesetzte noch weiche Masse des Befestigungsdomes 3 der Kontur der Kante des ersten Bauteiles 1 an.

In Fig. 7e wird schließlich das Werkzeug 4 vom Bauteil 1 und vom Befestigungsdom 3 abgezogen. Danach wird der verbleibende zweite Teil der Verpackung 9 vom Befestigungsdom 3 abgezogen, wie in Fig. 7f ersichtlich. Das Material des Befestigungsdomes 3 härtet schließlich aus, und kann als Befestigungsdom, beispielsweise für eine Schraube, verwendet werden, um Bauteile zu verbinden.

Die Erfindung stellt somit ein besonders einfaches und kostengünstiges Verfahren dar, dass eine sichere Verbindung der Bauteile ermöglicht und dabei auch tolerant bezüglich der Oberflächenbeschaffenheit der Bauteile ist.

### Bezugszeichenliste

- 1: erstes Bauteil
- 2: zweites Bauteil
- 3: Befestigungsdom
- 4: Werkzeug
- 5: Bohrung
- 6: Verbindungselement
- 7: Verpackung
- 8: erster Teil der Verpackung
- 9: zweiter Teil der Verpackung

## Patentansprüche

1. Verfahren zur Verbindung eines ersten Bauteils (1) mit einem zweiten Bauteil (2), wobei
- ein Befestigungsdom (3) aus aushärtbarem Material auf das erste Bauteil (1) aufgebracht wird,
- der Befestigungsdom (3) auf dem ersten Bauteil (1) aushärtet, und
- ein Verbindungselement (6) durch das zweite Bauteil (2), das erste Bauteil (1) und zumindest teilweise durch den Befestigungsdom (3) geführt wird, **dadurch gekennzeichnet, dass** das erste Bauteil (1) und das zweite Bauteil (2) flach ausgebildet sind und aufeinander liegen und das Material des Befestigungsdomes (3) eine Formstabilität aufweist, so dass der Befestigungsdom (3) die Form eines Domes, also eine Erhebung ausbildet und bis zum Aushärten des Materials bewahrt.

2. Verfahren nach Anspruch 1,
**dadurch gekennzeichnet, dass** das aushärtbare Material so ausgeführt ist, dass es am ersten Bauteil (1) stoffschlüssig haftet.

3. Verfahren nach Anspruch 1,
**dadurch gekennzeichnet, dass** das aushärtbare Material ein Kunststoff, insbesondere ein thermoplastischer Kunststoff ist.

4. Verfahren nach Anspruch 1,
**dadurch gekennzeichnet, dass** das erste und/oder das zweite Bauteil aus Kunststoff besteht.

5. Verfahren nach Anspruch 1,
**dadurch gekennzeichnet, dass** das Verbindungselement (6) eine Schraube ist.

6. Verfahren nach Anspruch 1,
**dadurch gekennzeichnet, dass** das erste und/oder das zweite Bauteil (1, 2) an einer Position, an der die beiden Bauteile (1,2) miteinander verbunden werden, vorgebohrt sind.

7. Verfahren nach Anspruch 1,
**dadurch gekennzeichnet, dass** der Befestigungsdom (3) zum Zeitpunkt des Einführens des Verbindungselements (6) nicht vorgebohrt ist.

8. Verfahren nach Anspruch 1,
**dadurch gekennzeichnet, dass** das aushärtbare Material durch Einwirkung von Luft, Temperaturänderung, Lichteinstrahlung oder durch Beigabe eines Zusatzstoffes aushärtet.

9. Verfahren nach Anspruch 1,
**dadurch gekennzeichnet, dass** das aushärtbare Material vor dem Aufbringen auf das erste Bauteil (1) aus einer luftdichten Verpackung (7), insbesondere aus einer Einzel-Verpackung für genau einen Befestigungsdom (3), entnommen wird.

10. Verfahren nach Anspruch 1,
**dadurch gekennzeichnet, dass** das aushärtbare Material in ein Werkzeug (4) eingebracht wird, mit dem Werkzeug (4) auf das erste Bauteil (1) aufgebracht wird, dann vom Werkzeug (4) getrennt wird und dann auf dem ersten Bauteil (1) aushärtet.

11. Verfahren nach Anspruch 10,
**dadurch gekennzeichnet, dass** das aushärtbare Material in einer Verpackung (7), insbesondere in einer Einzel-Verpackung für genau einen Befestigungsdom (3), in das Werkzeug (4) eingelegt wird und vor dem Aufbringen auf das erste Bauteil (1) zumindest ein erster Teil der Verpackung (8) entfernt wird.

12. Verfahren nach Anspruch 11,
**dadurch gekennzeichnet, dass** ein zweiter Teil der Verpackung (9) nach dem Aufbringen des aushärtbaren Materials auf das erste Bauteil (1) entfernt wird.

13. Verfahren nach Anspruch 10,
**dadurch gekennzeichnet, dass** das Werkzeug (4) dazu ausgelegt ist, das aushärtbare Material vor dem Aufbringen auf das erste Bauteil (1) zumindest abschnittsweise aufzuweichen, beispielsweise indem durch das Werkzeug Hitze an das aushärtbare Material abgegeben wird.

## Claims

1. Method for connecting a first component (1) to a second component (2), wherein
- a fastening dome (3) made of hardenable material is applied to the first component (1),
- the fastening dome (3) hardens on the first component (1), and
- a connecting element (6) is passed through the second component (2), the first component (1) and at least partially through the fastening dome (3), **characterized in that** the first component (1) and the second component (2) are flat and lie on each other and the material of the fastening dome (3) has a stability of form so that the fastening dome (3) realizes the form of a dome, i.e. an elevation, and maintains it until the material hardens.

2. Method according to Claim 1,
**characterized in that** the hardenable material is constituted such that it adheres by material bonding to the first component (1).

3. Method according to Claim 1,
**characterized in that** the hardenable material is a plastic, in particular a thermoplastic material.

4. Method according to Claim 1,
**characterized in that** the first and/or the second component is/are composed of plastic.

5. Method according to Claim 1,
**characterized in that** the connecting element (6) is a screw.

6. Method according to Claim 1,
**characterized in that** the first and/or the second component (1, 2) is/are predrilled at a position at which the two components are connected to each other.

7. Method according to Claim 1,
**characterized in that** the fastening dome (3) is not predrilled at the time when the connecting element (6) is inserted.

8. Method according to Claim 1,
**characterized in that** the hardenable material hardens as a result of the action of air, temperature change, exposure to light, or as the result of addition of an additive.

9. Method according to Claim 1,
**characterized in that**, before being applied to the first component (1), the hardenable material is removed from an air-tight packaging (7), in particular from a single packaging for just one fastening dome (3).

10. Method according to Claim 1,
**characterized in that** the hardenable material is put into a tool (4), applied to the first component (1) by means of the tool (4), then separated from the tool (4), and then hardens on the first component (1).

11. Method according to Claim 10,
**characterized in that** the hardenable material is inserted in the tool (4) while in a packaging (7), in particular in a single packaging for just one fastening dome (3) and, before the hardenable material is applied to the first component (1), at least a first part of the packaging (8) is removed.

12. Method according to Claim 11,
**characterized in that** a second part of the packaging (9) is removed after the hardenable material has been applied to the first component (1).

13. Method according to Claim 10,
**characterized in that** the tool (4) is designed to soften the hardenable material, at least portionally, before it is applied to the first component (1), for example **in that** heat is delivered to the hardenable material by the tool.

## Revendications

1. Procédé destiné à relier un premier composant (1) à un second composant (2),
- un dôme de fixation (3) en matériau durcissable étant appliqué sur le premier composant (1),
- le dôme de fixation (3) durcissant sur le premier composant (1) et
- un élément de liaison (6) étant guidé à travers le second composant (2), le premier composant (1) et au moins en partie à travers le dôme de fixation (3), **caractérisé en ce que** le premier composant (1) et le second composant (2) sont réalisés sous forme plate et reposent l'un sur l'autre et le matériau du dôme de fixation (3) présente une stabilité de forme, de sorte que le dôme de fixation (3) constitue la forme d'un dôme, c'est-à-dire d'un rehaussement et la conserve jusqu'au durcissement du matériau.

2. Procédé selon la revendication 1,
**caractérisé en ce que** le matériau durcissable est réalisé de manière à adhérer par engagement par liaison de matière sur le premier composant (1).

3. Procédé selon la revendication 1,
**caractérisé en ce que** le matériau durcissable est un plastique, en particulier un plastique thermoplastique.

4. Procédé selon la revendication 1,
**caractérisé en ce que** le premier et/ou le second composant se compose(nt) de plastique.

5. Procédé selon la revendication 1,
**caractérisé en ce que** l'élément de liaison (6) est une vis.

6. Procédé selon la revendication 1,
**caractérisé en ce que** le premier et/ou le second composant (1, 2) sont pré-percés au niveau d'une position à laquelle les deux composants (1, 2) sont reliés l'un à l'autre.

7. Procédé selon la revendication 1,
**caractérisé en ce que** le dôme de fixation (3) n'est pas pré-percé au moment de l'introduction de l'élément de liaison (6).

8. Procédé selon la revendication 1,
**caractérisé en ce que** le matériau durcissable durcit sous l'effet de l'air, d'une variation de température, d'un rayonnement de lumière incident ou par apport d'un additif.

9. Procédé selon la revendication 1,
**caractérisé en ce que** le matériau durcissable, avant l'application sur le premier composant (1), est enlevé d'un emballage étanche à l'air (7), en particulier d'un emballage individuel pour exactement un dôme de fixation (3).

10. Procédé selon la revendication 1,
**caractérisé en ce que** le matériau durcissable est introduit dans un outil (4), est appliqué avec l'outil (4) sur le premier composant (1), puis est séparé de l'outil (4) et est ensuite durci sur le premier composant (1).

11. Procédé selon la revendication 10,
**caractérisé en ce que** le matériau durcissable dans un emballage (7), en particulier dans un emballage individuel pour exactement un dôme de fixation (3), est introduit dans l'outil (4) et au moins une première partie de l'emballage (8) est enlevée avant l'application sur le premier composant (1).

12. Procédé selon la revendication 11,
**caractérisé en ce qu'**une deuxième partie de l'emballage (9) est enlevée après l'application du matériau durcissable sur le premier composant (1).

13. Procédé selon la revendication 10, **caractérisé en ce que** l'outil (4) est conçu pour ramollir au moins partiellement le matériau durcissable avant l'application sur le premier composant (1), par exemple par émission de chaleur par l'outil sur le matériau durcissable.
